# EUROPEAN PATENT SPECIFICATION

(11) **EP 3 335 078 B1**
(45) Date of publication and mention of the grant of the patent: **29.01.2020**
(21) Application number: 16779173.0
(22) Date of filing: 10.08.2016
(51) Int. Cl.: G03B 17/56

(54) **APPARATUS FOR ASTROPHOTOGRAPHY**
VORRICHTUNG FÜR DIE ASTROPHOTOGRAPHIE
APPAREIL POUR L'ASTROPHOTOGRAPHIE

(30) Priority: 10.08.2015 IT UB20153028
(43) Date of publication of application: 20.06.2018
(73) Proprietor: PRIMALUCELAB I.S.R.L., 33170 Pordenone (IT)
(72) Inventor: BRADASCHIA, Filippo, 33170 Pordenone (IT); CAUZ, Omar, 33080 Porcia (IT); CATTAPAN, Paolo, 33033 Codroipo (IT)
(74) Representative: Petraz, Davide Luigi
(86) International application number: PCT/IB2016/054815
(87) International publication number: WO 2017/025908

(56) References cited:
- WO-A1-00/25166
- US-A1- 2003 025 994
- US-A1- 2008 168 492
- US-A1- 2014 085 717
- US-B1- 6 327 081
- US-B1- 6 369 942

## Description

### FIELD OF THE INVENTION

The present invention concerns an apparatus used in the field of photography. In particular, the present invention concerns an apparatus used in the field of astrophotography, both amateur and professional, which uses for example at least one telescope.

### BACKGROUND OF THE INVENTION

It is known to use apparatuses for astronomical observation in the domain of visible electromagnetic radiations. Such apparatuses are generally identified as apparatuses for astrophotography.

Known apparatuses for astrophotography are generally provided with at least one instrument to capture images, for example an optical telescope, which allows users to acquire said astrophotographs, such as images of galaxies, constellations, stars, etc.

In order to take astrophotographs, it is generally necessary to go during the night to places that allow good visibility of the sky, and that allow the correct functioning of the apparatuses during acquisitions.

Apparatuses for astrophotography are usually provided with a movement device, or mount, which is configured to move and direct the telescope during the astrophotography sessions, and with a support element, configured to support the telescope.

It is also known to use, in combination with the main telescope, an auxiliary telescope, called guide telescope, or a guide system, called off-axis guide, configured to allow a user to correct the tracking of the main telescope to prevent tracking errors caused by the mount.

The telescopes used require a power source, which is generally outside and independent from the apparatus used for the astrophotography.

This is disadvantageous because the user is obliged to take with him one or more external power batteries, which can be bulky and heavy. Moreover, in order to guarantee the functioning of the apparatus for astrophotography for long periods of time, external power batteries must often have extremely high capacity, and hence very large sizes: consequently, they are difficult to transport.

Furthermore, for the correct functioning of the astrophotography apparatus, each component needs various power and/or control cables, which makes the transport of the various elements to the place where the astrophotographs will be taken even more inconvenient.

To this we must also add the fact that, due to the large number of elements, the apparatus requires a long assembly time, generally about an hour all in all.

In order to be able to memorize images and/or videos of what is acquired by the telescope, and/or to be able to manage and command the functioning of the apparatus, the user must necessarily take at least an electronic processor directly to the acquisition place, such as for example a personal computer, for example a notebook.

This is very disadvantageous because using a personal computer requires another external power source and consequent power cables and command cables to be connected to the apparatus, which make the transport and management of the various elements even more inconvenient.

During the astrophotography sessions, the telescopes are moved continuously by the mounts, so that they can follow the astral points or zones of interest for the user, and they stay switched on for many hours consecutively.

As a consequence, during the movement of the telescopes the power and/or control cables used can often and accidentally get tangled and/or detached, which can disadvantageously entail an incorrect functioning of the apparatus and/or damage to the elements used and/or loss of data concerning the acquisitions memorized until that moment.

In the state of the art some astrophotography apparatuses have been proposed which attempt to deal with these disadvantages.

For example, US 2014/085717 A1 describes an apparatus for astrophotography that comprises a structural element configured to connect a control and command unit to at least one acquisition device or movement device.

In this document command units can be used that are limited in the functions they can perform. This is disadvantageous because it does not allow to obtain a complete and various control of the astrophotography apparatus, since it is necessary to use other external devices to be able to control and command all the functions of the astrophotography apparatus.

Moreover, this state-of-the-art document describes a structural element that can be used only in determinate and specific types of astrophotography apparatuses, suitably designed for this purpose.

This limits the applicability of the solution to different types of astrophotography apparatuses.

WO 00/25166 A1, US 2008/168492 A1, US 6,369,942 B1, US 6,327,081 B1 and US 2003/025994 also describe solutions for photography or astrophotography apparatuses that suffer from the disadvantages indicated above.

There is therefore a need to obtain an apparatus for astrophotography that overcomes the disadvantages of the state of the art as cited above.

The purpose of the present invention is to obtain an apparatus for astrophotography that allows to improve, facilitate and make more convenient the use, management, powering, assembling and transport of the apparatus.

In particular, one purpose of the present invention is to obtain an apparatus for astrophotography that can be completely commanded and controlled without using a large number of external devices, and which is therefore as complete as possible in its entirety, which does not create problems in transport and movement, and which does not require for all these functions the need for connection to external devices.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

Embodiments described here concern an apparatus for astrophotography comprising at least an acquisition device configured to acquire astrophotographs, a support element, a movement device configured to move the acquisition device, and a control and command unit.

According to one aspect of the present invention, the apparatus for astrophotography comprises at least one structural assembly element configured to house the control and command unit and connect it to at least one of either the acquisition device or the movement device in order to simplify connections, to modify them and to guarantee them over time, preventing the typical problems of the state of the art.

This allows to incorporate the optical part, the electronic intelligence part and the support part of the apparatus in limited spaces, inside a single containing structure.

With the continual technological improvements under way, the apparatus can therefore be more and more miniaturized with consequent advantages in terms of installation, use, management, assembly and transport.

According to another aspect of the present invention, the structural assembly element is the universal type and can be used in any astrophotography apparatus, since it can be associated with an acquisition device and/or movement device of substantially any known type. This allows to increase the versatility of the whole astrophotography apparatus, to considerably facilitate the assembly and management thereof, and to install the control and command unit in pre-existing devices, not specifically designed for such installation.

According to one aspect of the present invention, the control and command unit is configured to control and command at least the functioning of the acquisition device.

The control and command unit is chosen from a group consisting of an electronic board, an integrated device, a mini computer or any other device equipped with an operating system that allows a large number of performable functions, without requiring the use of other, external devices.

According to a variant, the control and command unit is provided with a power device, such as a battery for example, configured to electrically power at least the acquisition device.

According to another variant, the control and command unit is configured to create a cabled and/or wireless connection network, accessible to at least one user, for a greater control and to drive the apparatus remotely.

According to a possible variant, the structural assembly element consists of a box-like containing element, defining a containing compartment, inside which the control and command unit is installed.

According to another possible variant, the control and command unit is installed on the structural element.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a lateral view of an apparatus for astrophotography in accordance with embodiments of the present invention;
- fig. 2 is a perspective view of an apparatus for astrophotography in accordance with embodiments of the present invention;
- fig. 3 is a lateral view of an apparatus for astrophotography in accordance with embodiments of the present invention.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We shall now refer in detail to the various embodiments of the present invention, of which one or more examples are shown in the attached drawing. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

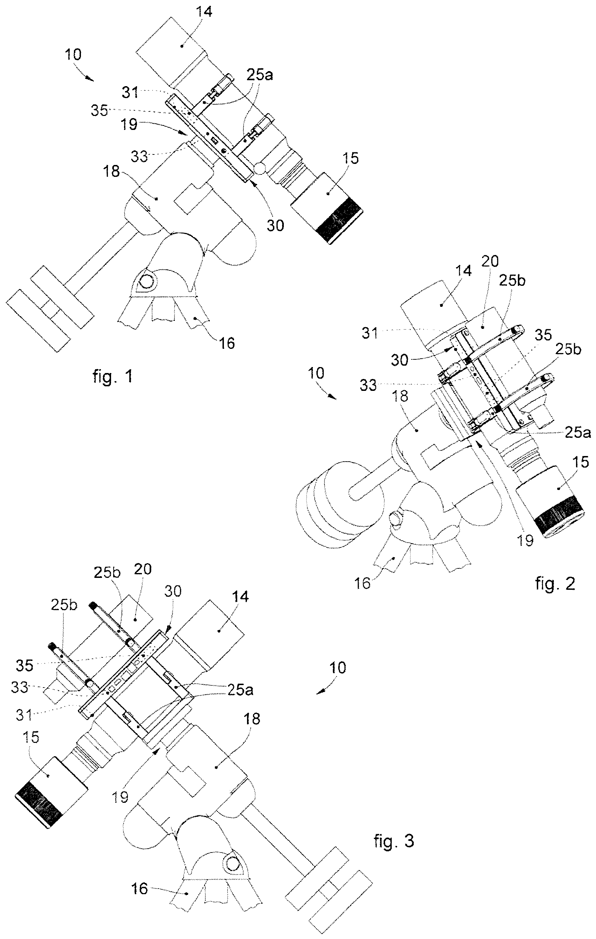

According to the present invention, figs. 1-4 describe an apparatus 10 for astrophotography, whether it is used for amateur or professional astrophotography, configured to acquire astrophotographs such as astral images, relating for example to galaxies, constellations, stars, etc., in real time.

According to the present invention, the apparatus 10 comprises at least a device 14 for acquiring astrophotographs.

According to some embodiments of the present invention, the acquisition device 14 can be for example an optical telescope. In particular, the acquisition device 14 can have a tubular shape with a circular cross section.

It is understood that this feature is not restrictive of the field of protection of the present invention since any kind of acquisition device 14 whatsoever can be used, which is able to acquire astrophotographs in real time.

According to the present invention, the acquisition device 14 can comprise a recording device 15.

The recording device 15 can be for example a photo camera or a CCD camera, and can be configured to record the images acquired by the acquisition device 14.

According to embodiments described using the attached drawings, the recording device 15 can be removably attached to a terminal part of the acquisition device 14.

In particular, the recording device 15 can be attached so as to represent an extension of the acquisition device 14.

According to the present invention, the apparatus 10 comprises a support element 16, configured to support the acquisition device 14. In particular, the support element 16 can be for example a known tripod, commonly used in the field of astrophotography.

According to some embodiments of the present invention, the apparatus 10 can comprise a movement device 18 configured to move the acquisition device 14, for example in one or more predefined directions of movement.

According to some embodiments of the present invention, as per the attached drawings, the movement device 18 can be installed on the support element 16 and is connected to the acquisition device 14.

In particular, the movement device 18 can move the acquisition device 14 with respect to the support element 16 to allow the acquisition device 14 to acquire images of astral bodies, following the motion of terrestrial rotation.

According to the present invention, the movement device 18 can be for example an equatorial or azimuth mount, which moves in synchrony with the earth's rotation.

According to the present invention, the apparatus 10 can comprise a secondary acquisition device, like a guide device 20.

The guide device 20 can be for example an optical telescope having a tubular shape with a circular cross section.

According to the present invention, the guide device 20 is configured to correct the tracking of the acquisition device 14 so as to prevent tracking errors caused by the movement device 18.

According to a possible variant embodiment, the guide device 20 can be replaced for example by an off-axis guide which, connected to the acquisition device 14, allows to correct the tracking of the latter to prevent tracking errors described above.

According to some embodiments of the present invention, the guide device 20 is connected to the acquisition device 14.

The guide device 20 can be connected above the acquisition device 14, in particular it can be disposed in parallel and have the same orientation with respect to the latter.

According to the present invention, the apparatus 10 comprises a control and command unit 33 configured to control and command at least the functioning of the acquisition device 14.

According to a possible embodiment, the control and command unit 33 can be configured to control and command the functioning of the acquisition device 14 and at least of the movement device 18 and/or the guide device 20.

According to some embodiments of the present invention, the control and command unit 33 can be chosen from a group consisting of an electronic board, an integrated device, a mini computer or suchlike. In particular, the control and command unit 33 can be equipped with a processor and an operating system can be installed inside it.

According to one aspect of the present invention, the control and command unit 33 can be programmable and used in different ways according to the requirements of use of every user.

The user can advantageously avoid having necessarily to take with him an electronic processor for acquisitions since all the functions needed for the apparatus 10 to function can be performed by the control and command unit 33.

According to some embodiments of the present invention, the apparatus 10 comprises at least a structural assembly element 30, configured to house the control and command unit 33 and connect it to at least one of either the acquisition device 14 or the movement device 18.

According to one aspect of the present invention, the structural assembly element 30 is the universal type and can be used substantially in any astrophotography apparatus 10.

According to the present invention, the structural assembly element 30 can have a box-like shape for example, defining an internal housing compartment.

According to one aspect of the present invention, the apparatus 10 can comprise attachment elements, configured to allow to attach the acquisition device 14 and the guide device 20 to each other and/or to other elements that make up the apparatus 10.

In particular, the attachment elements can be attachment rings 25a, 25b, with a circular shape and able to be coupled with the acquisition device 14 and the guide device 20.

According to some embodiments of the present invention, the acquisition device 14 can be coupled with first rings 25a, mating in size.

Furthermore, the guide device 20 can be coupled with second rings 25b, mating in size.

According to the present invention, as per the attached drawings, for example two first rings 25a and two second rings 25b can be provided.

According to embodiments described using fig. 1, the structural assembly element 30 is connected to the movement device 18 and the acquisition device 14.

In particular, the structural assembly element 30 can be connected to an upper terminal part 19 of the movement device 18 and to the first rings 25a coupled with the acquisition device 14.

According to a possible embodiment, the guide device 20 can be connected to the acquisition device 14.

In particular, the second rings 25b of the guide device 20 can be connected to the first rings 25a of the acquisition device 14.

According to a second embodiment, as in figs. 2 and 3, the structural assembly element 30 is connected to the acquisition device 14 and the guide device 20.

In particular, the acquisition device 14 is connected to the upper terminal part 19 of the movement device 18.

In this embodiment, the first rings 25a are connected at the lower part to the upper terminal part 19 of the movement device 18, and at the upper part to the structural assembly element 30, while the second rings 25b are connected at the lower part to the structural assembly element 30.

In other possible embodiments, not shown in the attached drawings, the disposition of the first rings 25a and second rings 25b can be inverted, and/or of the acquisition device 14 and the guide device 20.

According to one aspect of the present invention, the structural assembly element 30 can be connected to any universal attachment plate whatsoever, with which each acquisition device is generally provided (dove-tailed attachments such as "Vixen" or "Losmandy"), which allows to obtain an apparatus 10 compatible with acquisition devices 14, more specifically with optical telescopes of different sizes, even if the apparatus 10 does not comprise attachment rings 25a, 25b.

In particular, the structural assembly element 30 can be provided with one or more sliding seatings, inside which universal attachment plates of acquisition devices 14 of different size can slide, for a removable coupling with them.

According to a particularly preferred embodiment of the present invention, as per the attached drawings, the structural assembly element 30 has a containing compartment 31 inside which the control and command unit 33 is installed.

According to another embodiment of the present invention, the control and command unit 33 can be installed on the structural assembly element 30.

In both embodiments described above, it is advantageously possible to have the control and command unit 33 substantially comprised in the bulk of the structural assembly element 30.

According to another aspect of the present invention, the control and command unit 33 can be provided with at least one power device 35.

The power device 35 can be integrated, like a battery, or external, like a power pack or a battery, and uses the current of the power source, distributing it to the devices connected by means of a multiple electric adapter.

According to some embodiments, the power device 35 can be configured to electrically power at least the acquisition device 14.

In a possible embodiment, the power device 35 can be configured to power the acquisition device 14 and at least the movement device 18 and/or the guide device 20.

Using a multiple electric power adaptor simplifies assembly and reduces the costs of the apparatus 10, since fewer power cables are used.

Moreover, the closeness of the control and command unit 33, and hence of the power device 35, to the acquisition device 14 allows to considerably reduce the length of the various control and power cables needed for the correct functioning of the whole apparatus 10.

This last aspect is particularly advantageous since it almost totally prevents the possibility of any entanglement and/or detachment of control and/or power cables during acquisitions, since the same cables substantially follow the movement of the acquisition device 14.

According to one aspect of the present invention, the structural assembly element 30 can be made of a high heat conductivity material.

According to a possible embodiment, the structural assembly element 30 can be made of metal material for example.

This allows the structural assembly element 30 to effectively dissipate the heat of the control and command unit 33 and the power device 35 without needing to use auxiliary cooling systems.

This is particularly advantageous since it allows to obtain savings in economic terms and in terms of bulk of the whole apparatus 10.

According to one aspect of the present invention, the control and command unit 33 can be configured to create a cabled and/or wireless connection network.

In particular, the wireless connection network can be for example a "Wi-Fi" transmission network, accessible to the one or more users, to control and drive the apparatus 10 remotely.

It is understood that this aspect does not limit the field of the present invention, since the control and command unit 33 can create any other type of wireless connection network, such as for example a "Bluetooth" transmission network, which allows the one or more users to control and drive the apparatus 10 remotely.

According to the present invention, the user can connect to the wireless connection network with a mobile electronic device to be able to control and command the functioning of the apparatus 10, interacting with the control and command unit 33, without necessarily being near it.

In particular, the user can use the mobile electronic device as a graphical interface to control the functioning of the apparatus 10 and as a command interface to interact with the control and command unit 33, inserting one or more inputs.

The mobile electronic device can be chosen from a group consisting of a smartphone, a tablet, a notebook, a smartwatch or other mobile electronic device with a graphical and/or command interface.

As a consequence, transporting the objects needed for astrophotography is much easier and quicker, since a small mobile electronic device replaces an electronic device like an electronic processor, which is relatively large in size.

According to one aspect of the present invention, the user can in any case connect to the wireless connection network with his electronic processor, without needing to connect control cables to the apparatus 10, unlike what is generally provided in the state of the art.

According to the present invention, the control and command unit 33 can comprise a plurality of inputs and outputs, accessible from the structural assembly element 30, for example USB, HDMI, VGA, etc., for connection to external electronic devices which are useful, for example, during the download of data acquired.

According to one aspect of the present invention, the structural assembly element 30 can be provided with a connector that allows to remove the structural assembly element 30 from the apparatus 10 by a rapid detachment.

This allows to further improve the management and use of the apparatus 10, allowing the user to use the structural assembly element 30 singly, without necessarily having to detach other elements of the apparatus, for example during the normal functioning thereof.

It is clear that modifications and/or additions of parts may be made to the apparatus 10 as described heretofore, without departing from the scope of the present invention as defined by the claims.

It is also clear that, although the present invention has been described with reference to some specific examples, a person of skill in the art shall certainly be able to achieve many other equivalent forms of apparatus 10, having the characteristics as set forth in the claims.

## Claims

1. Apparatus for astrophotography comprising at least an acquisition device (14) configured to acquire astrophotographs, a support element (16), a movement device (18) configured to move the acquisition device (14), and a control and command unit (33), said apparatus comprising at least one structural assembly element (30) configured to accommodate said control and command unit (33) inside it and to connect the latter with at least one of either said acquisition device (14) or said movement device (18), wherein said control and command unit (33 is a computer equipped with a processor and with an operating system installed inside it, to command the functioning of the acquisition device (14) and at least one of the movement device (18) and/or a guide device (20), wherein the control and command unit (33) is further provided with at least one power device (35) configured to power said acquisition device (14) and at least said movement device (18) and/or said guide device (20), and wherein said control and command unit (33) is configured to create a cabled and/or wireless connection network accessible to at least one user to control and drive said apparatus (10) remotely.

2. Apparatus as in claim 1, **characterized in that** said structural assembly element (30) is of the type associable with any acquisition device (14) and/or movement device (18), and is of the box-like type and includes a containing compartment (31) inside which said control and command unit (33) is installed.

3. Apparatus as in any claim hereinbefore, **characterized in that** it comprises attachment rings (25a) configured to be coupled with at least said acquisition device (14), in order to removably connect at least said acquisition device (14) to at least one of either said movement device (18) or structural assembly element (30).

4. Apparatus as in any claim hereinbefore, **characterized in that** it comprises a guide device (20) configured to correct the tracking of said acquisition device (14).

5. Apparatus as in claim 4, **characterized in that** said structural assembly element (30) is connected to said acquisition device (14) and to said guide device (20).

6. Apparatus as in claim 5, **characterized in that** it comprises attachment rings (25b) configured to be coupled with at least said guide device (20), in order to removably connect at least said guide device (20) to at least one of either said acquisition device (14), movement device (18) or structural assembly element (30).

7. Apparatus as in any claim hereinbefore, **characterized in that** said structural assembly element (30) is made of a material with high heat conductivity to dissipate the heat of said control unit (33) and said power device (35).

8. Apparatus as in any claim hereinbefore, **characterized in that** said structural assembly element (30) is provided with a connector that allows to remove said structural assembly element (30) from the apparatus (10) with a rapid detachment.

## Patentansprüche

1. Vorrichtung zur Astrofotografie, mit wenigstens einer Erlangungsvorrichtung (14), die konfiguriert ist, um Astrofotografien zu erlangen, einem Stützelement (16), einer Bewegungsvorrichtung (18), die konfiguriert ist, um die Erlangungsvorrichtung (14) zu bewegen, und einer Steuer- und Befehlseinheit (33), wobei die Vorrichtung aufweist wenigstens ein strukturelles Zusammenbauelement (30), das konfiguriert ist, um die Steuer- und Befehlseinheit (33) darin aufzunehmen und diese mit wenigstens einer von entweder der Erlangungsvorrichtung (14) oder der Bewegungsvorrichtung (18) zu verbinden, wobei die Steuer- und Befehlseinheit (33) ein Computer ist, der ausgestattet ist mit einem Prozessor und mit einem Betriebssystem, das darin installiert ist, um den Betrieb der Erlangungsvorrichtung (14) und wenigstens einer von der Bewegungsvorrichtung (18) und/oder einer Führungsvorrichtung (20) zu befehligen, wobei die Steuer- und Befehlseinheit (33) ferner ausgestattet ist mit wenigstens einer Energievorrichtung (35), die konfiguriert ist, um die Erlangungsvorrichtung (14) und zumindest die Bewegungsvorrichtung (18) und/oder die Führungsvorrichtung (20) mit Energie zu versorgen, und wobei die Steuer- und Befehlseinheit (33) konfiguriert ist, um ein verkabeltes und/oder drahtloses Verbindungsnetzwerk zu schaffen, das zugänglich ist für wenigstens einen Verwender, um die Vorrichtung (10) zu steuern und anzutreiben.

2. Vorrichtung gemäß Anspruch 1, **dadurch gekennzeichnet, dass** das strukturelle Zusammenbauelement (30) vom Typ ist, der mit irgendeiner Erlangungsvorrichtung (14) und/oder Bewegungsvorrichtung (18) verbindbar ist und vom kastenartigen Typ ist und ein Aufnahmefach (31) aufweist, in welchem die Steuer- und Befehlseinheit (33) installiert ist.

3. Vorrichtung gemäß irgendeinem vorhergehenden Anspruch, **dadurch gekennzeichnet, dass** sie Anbringungsringe (25a) aufweist, die konfiguriert sind, um mit wenigstens der Erlangungsvorrichtung (14) gekuppelt zu sein, um wenigstens die Erlangungsvorrichtung (14) mit wenigstens einem von entweder der Bewegungsvorrichtung (18) oder dem strukturellen Zusammenbauelement (30) lösbar zu verbinden.

4. Vorrichtung gemäß irgendeinem vorhergehenden Anspruch, **dadurch gekennzeichnet, dass** sie eine Führungsvorrichtung (20) aufweist, die konfiguriert ist, um die Zielverfolgung der Erlangungsvorrichtung (14) zu korrigieren.

5. Vorrichtung gemäß Anspruch 4, **dadurch gekennzeichnet, dass** das strukturelle Zusammenbauelement (30) mit der Erlangungsvorrichtung (14) und mit der Führungsvorrichtung (20) verbunden ist.

6. Vorrichtung gemäß Anspruch 5, **dadurch gekennzeichnet, dass** sie Anbringungsringe (25b) aufweist, die konfiguriert sind, um mit wenigstens der Führungsvorrichtung (20) gekuppelt zu sein, um wenigstens die Führungsvorrichtung (20) mit wenigstens einem von entweder der Erlangungsvorrichtung (14), der Bewegungsvorrichtung (18) oder dem strukturellen Zusammenbauelement (30) lösbar zu verbinden.

7. Vorrichtung gemäß irgendeinem vorhergehenden Anspruch, **dadurch gekennzeichnet, dass** das strukturelle Zusammenbauelement (30) aus einem Material mit hoher Wärmeleitfähigkeit gemacht ist, um die Wärme der Steuereinheit (33) und der Energievorrichtung (35) abzuleiten.

8. Vorrichtung gemäß irgendeinem vorhergehenden Anspruch, **dadurch gekennzeichnet, dass** das strukturelle Zusammenbauelement (30) mit einem Verbinder bereitgestellt ist, der es ermöglich, das strukturelle Zusammenbauelement (30) von der Vorrichtung (10) via Schnellabtrennung abzunehmen.

## Revendications

1. Appareil d'astrophotographie comprenant au moins un dispositif d'acquisition (14) configuré pour acquérir des astrophotographies, un élément de support (16), un dispositif de déplacement (18) configuré pour déplacer le dispositif d'acquisition (14), et une unité de contrôle et de commande (33), ledit appareil comprenant au moins un élément (30) formant ensemble structurel configuré pour recevoir à l'intérieur de lui ladite unité de contrôle et de commande (33) et pour connecter celle-ci à au moins un parmi ledit dispositif d'acquisition (14) ou ledit dispositif de déplacement (18), ladite unité de contrôle et de commande (33) étant un ordinateur équipé d'un processeur et d'un système d'exploitation installés en lui, pour commander le fonctionnement du dispositif d'acquisition (14), et d'au moins un parmi le dispositif de déplacement (18) et/ou d'un dispositif de guidage (20), l'unité de contrôle et de commande (33) étant en outre pourvue d'au moins un dispositif d'actionnement (35) configuré pour actionner ledit dispositif d'acquisition (14) et au moins ledit dispositif de déplacement (18) et/ou ledit dispositif de guidage (20), et ladite unité de contrôle et de commande (33) étant configurée pour créer un réseau de connexion filaire et/ou sans fil accessible à au moins un utilisateur pour commander et entraîner ledit appareil (10) à distance.

2. Appareil selon la revendication 1, **caractérisé en ce que** ledit élément (30) formant ensemble structurel est du type susceptible d'être associé à tout dispositif d'acquisition (14) et/ou dispositif de déplacement (18), et est du type boîte et comprend un compartiment (31) apte à contenir, à l'intérieur duquel ladite unité de contrôle et de commande (33) est installée.

3. Appareil selon l'une quelconque des revendications précédentes, **caractérisé en ce qu'**il comprend des anneaux de fixation (25a) configurés pour être reliés avec au moins ledit dispositif d'acquisition (14), afin de connecter de manière amovible au moins ledit dispositif d'acquisition (14) à au moins un parmi ledit dispositif de déplacement (18) ou ledit élément (30) formant ensemble structurel.

4. Appareil selon l'une quelconque des revendications précédentes, **caractérisé en ce qu'**il comprend un dispositif de guidage (20) configuré pour corriger le suivi dudit dispositif d'acquisition (14).

5. Appareil selon la revendication 4, **caractérisé en ce que** ledit élément (30) formant ensemble structurel est relié audit dispositif d'acquisition (14) et audit dispositif de guidage (20).

6. Appareil selon la revendication 5, **caractérisé en ce qu'**il comprend des anneaux de fixation (25b) configurés pour être reliés au moins audit dispositif de guidage (20), afin de connecter de manière amovible au moins ledit dispositif de guidage (20) à au moins un parmi ledit dispositif d'acquisition (14), ledit dispositif de déplacement (18) ou ledit élément (30) formant ensemble structurel.

7. Appareil selon l'une quelconque des revendications précédentes, **caractérisé en ce que** ledit élément (30) formant ensemble structurel est fait d'un matériau ayant une conductivité thermique élevée pour dissiper la chaleur de ladite unité de commande (33) et dudit dispositif d'actionnement (35).

8. Appareil selon l'une quelconque des revendications précédentes, **caractérisé en ce que** ledit élément (30) formant ensemble structurel est muni d'un connecteur qui permet de retirer ledit élément (30) formant ensemble structurel par rapport à l'appareil (10) avec un système de détachement rapide.
